# FASCICULE DE BREVET EUROPEEN

(11) **EP 1 228 832 B1**
(45) Date de publication et mention de la délivrance du brevet: **23.05.2007**
(21) Numéro de dépôt: 02290218.3
(22) Date de dépôt: 31.01.2002
(51) Int. Cl.: B23H 9/10, B23H 7/26, B23H 9/14

(54) **Dispostif de centrage et de perçage de formes et de trous cylindriques**
Einrichtung zum Zentrieren und Bohren von Formen und zylindrischen Löchern
Device for centering and drilling shapes and cylindrical holes

(30) Priorité: 01.02.2001 FR 0101350
(43) Date de publication de la demande: 07.08.2002
(73) Titulaire: SNECMA, 75015 Paris (FR)
(72) Inventeur: Varin, Jean-Jacques Florentin André, 95000 Pontoise (FR)

(56) Documents cités:
- FR-A- 2 767 083
- US-A- 5 605 639

## Description

L'invention concerne un dispositif pour réaliser par électroérosion au moins un passage d'air de refroidissement rectiligne ayant un orifice de sortie évasé dans la paroi d'une aube creuse de turbomachine, comprenant au moins une électrode de forme fixée sur un premier porte-électrode et destinée à réaliser ledit orifice de sortie évasé et des moyens pour commander le déplacement dudit premier porte-électrode, ladite électrode de forme comportant une portion d'extrémité postérieure destinée à sa fixation sur ledit premier porte-électrode.

Un tel dispositif est connu du document US-A-5605639, qui montre le préambule de la revendication 1.

Les performances des turbomachines, destinées à l'aviation, sont continuellement augmentées. Par exemple, la poussée des moteurs s'accroît lorsqu'on augmente la température à l'entrée des turbines.

Cependant, cette augmentation des températures est limitée par la tenue thermo-mécanique des aubes du distributeur et des roues mobiles de turbine, car les propriétés mécaniques du matériau les constituants décroissent avec la température.

Il est connu de refroidir la paroi externe des aubes avec un air de refroidissement prélevé au niveau des compresseurs qui circule dans des cavités internes formées dans ces aubes et qui s'évacue par des passages ménagés dans la paroi externe de ces aubes. Les orifices de sortie de ces passages sont élargis et évasés afin que l'air de refroidissement forme un film de refroidissement qui s'écoule le long de la paroi de l'aube.

Il est connu de réaliser ces passages d'air par électroérosion. Toutefois, une même électrode est utilisée pour faire à la fois l'orifice évasé du passage et le passage lui-même, de sorte que l'électrode est de forme complexe et son usinage est difficilement réalisable.

De plus, un seul passage d'air est réalisé à la fois de sorte qu'il est nécessaire d'effectuer un réglage de l'électrode par rapport à l'aube entre chaque usinage, augmentant considérablement le temps de fabrication.

Le but de l'invention est de proposer un outillage qui permette de diminuer les coûts pour réaliser des passages d'air à l'aide d'un ensemble d'électrodes interchangeables de formes simples.

L'invention atteint son but par le fait que l'électrode de forme comporte une première face dans laquelle est ménagée une rainure pour le guidage d'une électrode rectiligne destinée à réaliser la partie rectiligne du passage d'air, une portion médiane de section contante et une portion d'extrémité antérieure pointue de section décroissante entre la portion médiane et la pointe de l'électrode de forme.

Avantageusement, la portion d'extrémité antérieure comporte outre la première face, trois pans biseautés.

Les pans peuvent être inclinés selon différents angles permettant ainsi de définir une géométrie particulière pour tout type d'orifice évasé.

La portion médiane de l'électrode de forme comporte avantageusement une section quadrangulaire. En fait, l'électrode de forme est avantageusement réalisée à partir d'une barre de section rectangulaire et la rainure a une section V.

L'électrode de forme est réalisée simplement à partir d'un barreau de section rectangulaire dont lequel on pratique une rainure longitudinale qui peut être en forme de V par exemple et dont on vient biseauter l'extrémité de sorte à former une section en pointe.

Avantageusement, le dispositif comporte en outre un second porte-électrode sur lequel est fixé au moins une électrode rectiligne susceptible de coulisser dans la rainure.

Le fait de doter le dispositif de deux électrodes permet d'utiliser des électrodes de formes faciles à usiner. En outre, le réglage de l'électrode rectiligne par rapport à l'électrode de forme permet de définir des géométries différentes pour les passages à usiner. De plus, en cas d'usure, il suffit de remplacer l'électrode qui est défaillante tout en conservant la deuxième.

L'électrode rectiligne est avantageusement cylindrique. Ainsi, en cas d'usure la seconde électrode est facilement remplaçable.

Avantageusement, le dispositif comporte en outre un patin destiné à retenir ladite électrode cylindrique dans la rainure.

Les électrodes sont généralement de longueur assez importante par rapport à leur section, ce qui les fragilise d'autant plus que le porte-électrode est loin de la zone d'usinage. Le patin permet de former un couvercle qui définit avec la forme en V de l'électrode un logement pour l'électrode cylindrique qui se trouve ainsi guidée au voisinage de la zone d'usinage des passages d'air.

Le dispositif comporte avantageusement des moyens pour déplacer simultanément le premier porte-électrode et le second porte-électrode.

Les deux portes-électrodes sont déplacées conjointement, l'électrode cylindrique étant en retrait par rapport à l'électrode de forme de manière à usiner en premier lieu l'orifice évasé du passage d'air.

Avantageusement, le dispositif comporte en outre des moyens pour déplacer le premier porte-électrode et le second porte-électrode indépendamment l'un de l'autre.

Dès que l'orifice évasé du passage d'air est terminé, l'électrode cylindrique continue son déplacement jusqu'à ce que le passage cylindrique soit réalisé. Ainsi, les efforts encaissés par les électrodes au cours de l'usinage sont mieux répartis.

Avantageusement, le premier porte-électrode supporte une pluralité d'électrodes de forme et le second porte-électrode supporte une pluralité d'électrodes rectilignes

Les électrodes étant réglables les unes par rapport aux autres, au cours d'une seule et même étape, il est possible d'usiner un ensemble de passages d'air préférentiellement sur une même aube.

D'autres caractéristiques et avantages de l'invention ressortiront à la lecture de la description suivante faite à titre d'exemple non limitatif et en référence aux dessins annexés dans lesquels :
- la figure 1 est une vue en perspective du dispositif d'usinage par électroérosion selon l'invention,
- la figure 2 est une vue en coupe d'une aube creuse de turbomachine au cours de l'usinage de l'orifice évasé d'un passage d'air de refroidissement ;
- la figure 3 est une coupe transversale des électrodes selon la ligne III-III des figures 2 et 5;
- la figure 4 est une vue en coupe de l'aube de la figure 2 à la fin de l'usinage du passage d'air de refroidissement ;
- la figure 5 est une vue en perspective de l'électrode de forme seule,
- la figure 5A est une vue de la figure 5 selon A,
- la figure 5B est une vue de la figure 5 selon B, et
- la figure 6 est une vue de dessous de l'électrode de forme avec l'électrode cylindrique en place.

Les systèmes de commandes destinés à actionner les différentes électrodes sont connus et non représentés. Selon l'invention, chaque électrode peut avoir son système de commande indépendant.

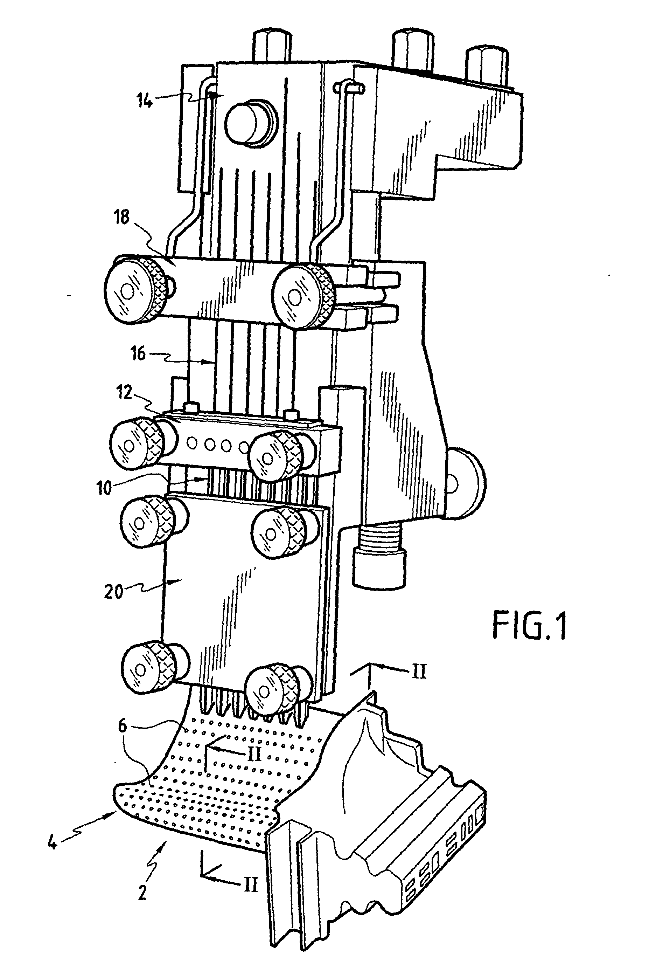

La figure 1 montre l'ensemble du dispositif d'usinage par électroérosion selon l'invention, avec une aube 2 creuse de turbomachine mise en place dans un porte-pièce non représenté. Cette aube 2 comporte une paroi externe 4 dans laquelle sont usinés des passages d'air 6.

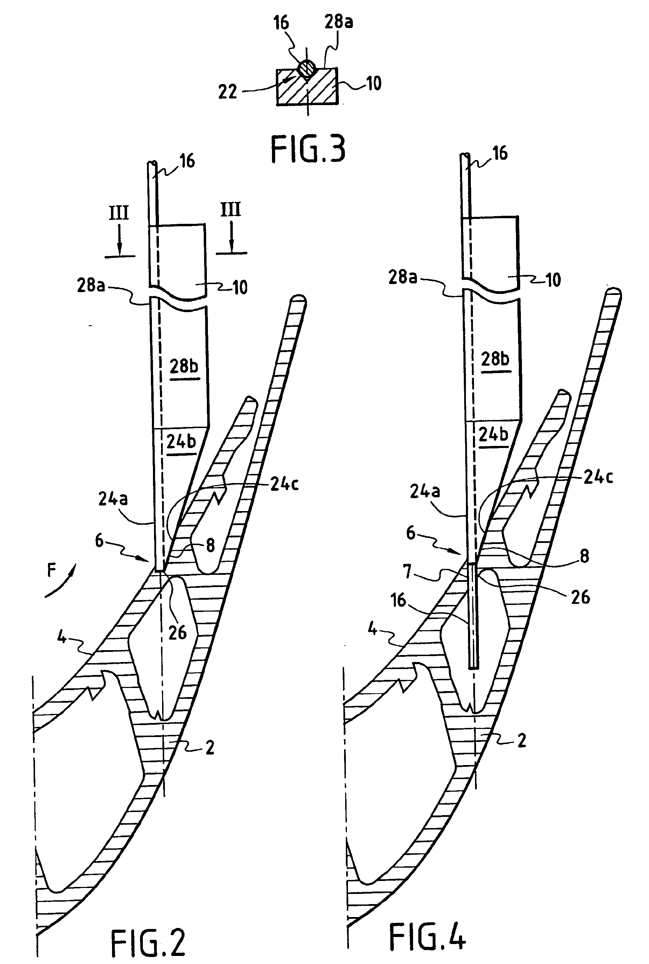

Sur la figure 2, on voit que ces passages d'air 6 comportent chacun un orifice de sortie 8 qui est évasé de manière évolutive vers l'aval dans le sens de l'écoulement des gaz de combustion représenté par la flèche F et une section rectiligne 7. Les différents passages d'air 6 sont obtenus par électroérosion à l'aide d'un ensemble d'électrodes de deux types.

Les électrodes du premier type sont des électrodes de forme 10 qui permettent de réaliser la forme évasée de l'orifice de sortie 8. Les électrodes de forme 10 comportent chacune une portion d'extrémité postérieure non représentée par laquelle chaque électrode de forme 10 est fixée en position, transversalement par rapport à l'aube 2 sur un premier porte-électrode 12 disposé au-dessus de ladite aube. Le porte-électrode 12 est monté verticalement mobile en translation sur une colonne 14 du dispositif, de manière à entraîner le déplacement simultané des électrodes de forme 10 lors de l'usinage.

La figure 2, montre que l'électrode de forme 10 comporte une portion d'extrémité 24 qui présente une section en pointe tronquée 26. Pour réaliser l'orifice de sortie 8 évasé de forme particulière, la portion d'extrémité 24 comporte trois pans biseautés 24b, 24c et 24d. Seuls les pans 24b et 24c sont visibles sur la figure 2.

Une rainure 22 destinée à contenir en partie une électrode de deuxième type est pratiquée longitudinalement dans une face 28a de la portion médiane 28 de chaque électrode de forme 10 et dans une face 24a de sa portion d'extrémité antérieure 24. Préférentiellement, les deux faces 24a et 28a sont dans le même plan.

La figure 3 montre que la rainure 22 en forme de V permet d'y faire coulisser une électrode rectiligne 16 par exemple. La forme de la rainure 22 peut être différente selon la forme du passage d'air 6 à réaliser.

Les électrodes du deuxième type sont préférentiellement des électrodes 16 cylindriques qui sont montées sur un second porte-électrode 18 également mobile verticalement en translation sur la colonne 14, comme représenté sur la figure 1.

Selon l'invention, le second porte-électrode 18 se trouve au-dessus du premier porte-électrode 12 et les électrodes cylindriques 16 peuvent coulisser chacun dans une rainure 22 des électrodes de forme 10 associées pour former des paires d'électrodes 10, 16.

La configuration des deux portes-électrodes 18 et 12 est telle que la distance entre le maintien des électrodes cylindriques 16 et l'aube 2 à usiner est grande. Pour diminuer les risques de déformations au cours de l'usinage, un patin 20 est fixé sur la colonne 14 afin de permettre un guidage précis des électrodes cylindriques 16 dans les rainures 22 au voisinage de la zone d'usinage. Le patin 20 est disposé en regard des rainures 22 et constitue une sorte de couvercle, qui maintient les électrodes cylindriques 16 dans leur rainure 22 et les guide au voisinage de la zone d'usinage.

Les deux portes-électrodes 12 et 18 permettent de régler chaque électrode de forme 10 et chaque électrode cylindrique 16 de manière indépendante, de sorte qu'il est possible d'usiner une série de passages d'air 6 sensiblement alignés en même temps sur une même aube 2.

Au début de l'usinage, l'extrémité libre de l'électrode cylindrique 16 est escamotée dans la portion d'extrémité antérieure 24 de l'électrode de forme 10 et on descend simultanément les deux portes-électrodes 12 et 18 à l'aide de moyens non représentés jusqu'à ce que l'électrode de forme 10 ait usiné l'orifice de sortie 8 évasé, comme représenté sur la figure 2.

La figure 4 montre que, dès que l'usinage de l'orifice de sortie 8 évasé est terminé, on descend à l'aide de moyens non représentés, le porte-électrode 18 seul, tout en maintenant l'électrode de forme 10 en place dans l'orifice de sortie 8, afin que l'électrode cylindrique 16 usine la section cylindrique 7 du passage d'air 6.

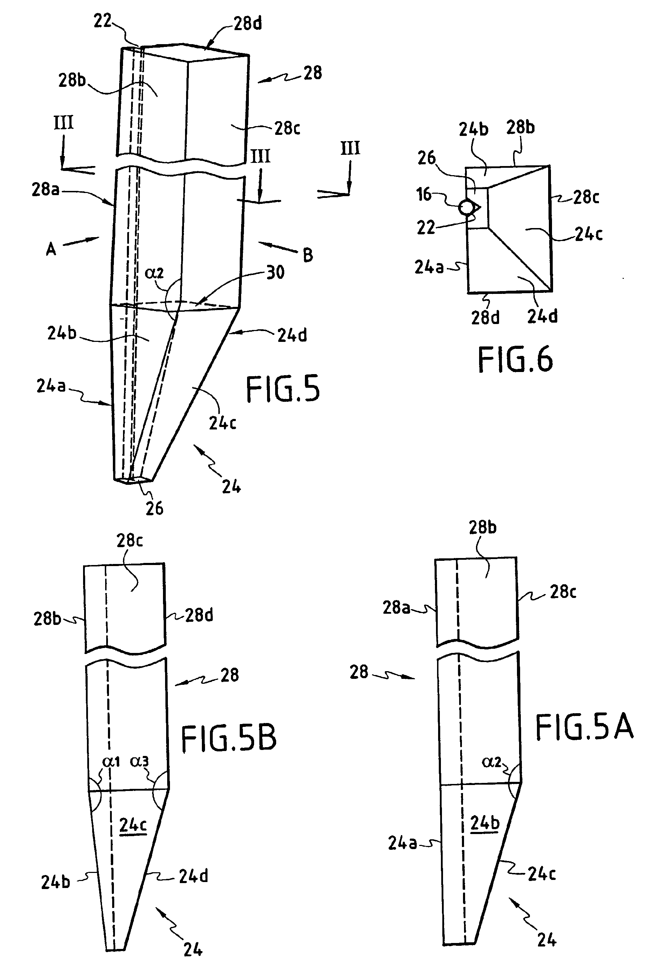

L'électrode de forme 10 est réalisée à partir d'un barreau de section rectangulaire constante dont une extrémité est biseauté. Comme représenté sur la figure 5, la portion médiane 28 comporte quatre faces 28a, 28b, 28c et 28d. La face 28a comporte la rainure 22 en V qui s'étend sur toute la longueur de l'électrode de forme 10.

Les figures 5a, 5b et 6 montrent un mode de réalisation particulier de l'électrode de forme 10. La portion d'extrémité 24 comporte quatre pans 24a, 24b, 24c et 24d qui sont reliés respectivement aux quatre faces 28a, 28b, 28c et 28d. La rainure 22 s'étend dans le pan 24a jusqu'à la section en pointe 26.

Le pan 24b, respectivement 24c et 24d, est écarté d'un angle α₁, respectivement α₂ et α₃, par rapport à la face 28b, respectivement 28c et 28d. Ainsi, l'inclinaison des pans 24a, 24b, 24c et 24d permet de définir une portion d'extrémité antérieure de section qui varie entre la section en pointe 26 en augmentant progressivement jusqu'à la section médiane 30.

La figure 6 montre l'électrode de forme 10 avec l'électrode cylindrique 16 en place dans la rainure 22. Selon la valeur des différents angles α₁, α₂ et α₃, on peut usiner une forme d'orifice de sortie 8 différente. En particulier, selon l'invention, l'angle α₁ est plus petit que l'angle α₃, de manière à obtenir une forme d'orifice de sortie 8 qui est non symétrique.

## Revendications

1. Dispositif pour réaliser par électroérosion au moins un passage d'air (6) de refroidissement rectiligne ayant un orifice de sortie (8) évasé dans la paroi d'une aube creuse (2) de turbomachine, comprenant au moins une électrode de forme (10) fixée sur un premier porte-électrode (12) et destinée à réaliser ledit orifice de sortie évasé (8) et des moyens pour commander le déplacement dudit premier porte-électrode (12), ladite électrode de forme (10) comportant une portion d'extrémité postérieure destinée à sa fixation sur ledit premier porte-électrode (12),
**caractérisé par le fait que** ladite électrode de forme (10) comporte une première face (28a, 24a) dans laquelle est ménagée une rainure (22) pour le guidage d'une électrode rectiligne (16) destinée à réaliser la partie rectiligne (7) dudit passage d'air (6), une portion médiane (28) de section contante et une portion d'extrémité (24) antérieure pointue de section décroissante entre ladite portion médiane (28) et la pointe (26) de l'électrode de forme (10).

2. Dispositif selon la revendication 1, **caractérisé par le fait** la portion d'extrémité antérieure comporte outre la première face (24a), trois pans biseautés (24b, 24c, 24d).

3. Dispositif selon la revendication 1 ou 2, **caractérisé par le fait** la portion médiane (28) de l'électrode de forme (10) présente une section quadrangulaire.

4. Dispositif selon l'une quelconque des revendications 1 à 3, **caractérisé par le fait que** l'électrode de forme (10) est réalisée à partir d'une barre de section rectangulaire.

5. Dispositif selon l'une quelconque des revendications 1 à 4, **caractérisé par le fait que** la rainure (22) a une section en V.

6. Dispositif selon l'une quelconque des revendications 1 à 5, **caractérisé par le fait qu'**il comporte en outre un second porte-électrode (18) sur lequel est fixé au moins une électrode rectiligne (16) susceptible de coulisser dans la rainure (22).

7. Dispositif selon la revendication 6, **caractérisé par le fait que** l'électrode rectiligne (16) est cylindrique.

8. Dispositif selon la revendication 6 ou 7, **caractérisé par le fait qu'**il comporte en outre un patin (20) destiné à retenir ladite électrode cylindrique (16) dans la rainure (22).

9. Dispositif selon l'une quelconque des revendications 6 à 8, **caractérisé par le fait qu'**il comporte en outre des moyens pour déplacer simultanément le premier porte-électrode (12) et le second porte-électrode (18).

10. Dispositif selon l'une quelconque des revendications 6 à 9, **caractérisé par le fait qu'**il comporte en outre des moyens pour déplacer le premier porte-électrode (12) et le second porte-électrode (18) indépendamment l'un de l'autre.

11. Dispositif selon l'une quelconque des revendications 6 à 10, **caractérisé par le fait que** le premier porte-électrode (12) supporte une pluralité d'électrodes de forme (10) et le second porte-électrode (18) supporte une pluralité d'électrodes rectilignes (16).

## Claims

1. Device for producing by electrical discharge machining at least one rectilinear cooling air duct (6) having a flared outlet orifice (8) in the wall of a hollow turbine engine blade (2), comprising at least one forming electrode (10) fixed on a first electrode support (12) and designed to produce said flared outlet orifice (8) and means for controlling the displacement of said first electrode support (12), said forming electrode (10) comprising a rear end portion designed to fix said forming electrode to said first electrode support (12), **characterized in that** said forming electrode (10) comprises a first face (28a, 24a) in which a groove (22) is made for guiding a rectilinear electrode (16) designed to produce the rectilinear part (7) of said air duct (6), a central portion (28) of uniform cross section and a pointed front end portion (24) of decreasing cross section between said central portion (28) and the tip (26) of the forming electrode (10).

2. Device according to Claim 1, **characterized in that**, apart from the first face (24a), the front end portion, (24a) comprises three bevelled faces (24b, 24c, 24d).

3. Device according to Claim 1 or 2, **characterized in that** the central portion (28) of the forming electrode (10) has a square cross section.

4. Device according to any one of Claims 1 to 3, **characterized in that** the forming electrode (10) is produced from a bar of rectangular cross section.

5. Device according to any one of Claims 1 to 4, **characterized in that** the groove (22) has a V-shaped cross section.

6. Device according to any one of Claims 1 to 5, **characterized in that** it further comprises a second electrode support (18) on which is fixed at least one rectilinear electrode (16) capable of sliding in the groove (22).

7. Device according to Claim 6, **characterized in that** the rectilinear electrode (16) is cylindrical.

8. Device according to Claim 6 or 7, **characterized in that** it further comprises a plate (20) designed to retain said cylindrical electrode (16) in the groove (22).

9. Device according to any one of Claims 6 to 8, **characterized in that** it further comprises means for simultaneously displacing the first electrode support (12) and the second electrode support (18).

10. Device according to any one of Claims 6 to 9, **characterized in that** it further comprises means for displacing the first electrode support (12) and the second electrode support (18) independently of one another.

11. Device according to any one of Claims 6 to 10, **characterized in that** the first electrode support (12) carries a plurality of forming electrodes (10) and the second electrode support (18) carries a plurality of rectilinear electrodes (16).

## Patentansprüche

1. Vorrichtung zur Ausführung mittels Elektroerosion von mindestens einem geradlinigen Kühlungsluftdurchlass (6) mit einer sich erweiternden Auslassöffnung (8) in der Wand einer hohlen Schaufel (2) einer Turbomaschine, die mindestens eine Formelektrode (10) umfasst, die auf einem ersten Elektrodenhalter (12) befestigt ist und dazu bestimmt ist, diese sich erweiternde Auslassöffnung (8) herzustellen, sowie Mittel umfasst, um die Bewegung dieses ersten Elektrodenhalters (12) zu steuern, wobei diese Formelektrode (10) einen hinteren Endabschnitt aufweist, der zu ihrer Befestigung an diesem Elektrodenhalter (12) bestimmt ist,
**dadurch gekennzeichnet,**
**dass** diese Formelektrode (10) eine erste Seite (28a, 24a) aufweist, in der eine Rille (22) zur Führung einer geradlinigen Elektrode (16) ausgeführt ist, die dazu bestimmt ist, den geradlinigen Teil (7) dieses Kühlungsluftdurchlasses (6) herzustellen, sowie einen mittleren Abschnitt (28) mit gleichbleibendem Querschnitt und einen vorderen, spitz zulaufenden Endabschnitt (24) mit zwischen diesem mittleren Abschnitt (28) und der Spitze (26) der Formelektrode (10) abnehmendem Querschnitt aufweist.

2. Vorrichtung nach Anspruch 1,
**dadurch gekennzeichnet,**
**dass** der vordere Endabschnitt abgesehen von der ersten Seite (24a) drei abgeschrägte Flächen (24b, 24c, 24d) aufweist.

3. Vorrichtung nach Anspruch 1 oder 2,
**dadurch gekennzeichnet,**
**dass** der mittlere Abschnitt (28) der Formelektrode (10) einen viereckigem Querschnitt aufweist.

4. Vorrichtung nach einem der Ansprüche 1 bis 3,
**dadurch gekennzeichnet,**
**dass** die Formelektrode (10) aus einer Stange mit rechtwinkeligem Querschnitt hergestellt ist.

5. Vorrichtung nach einem der Ansprüche 1 bis 4,
**dadurch gekennzeichnet,**
**dass** die Rille (22) einen V-förmigen Querschnitt hat.

6. Vorrichtung nach einem der Ansprüche 1 bis 5,
**dadurch gekennzeichnet,**
**dass** sie ferner einen zweiten Elektrodenhalter (18) aufweist, an dem mindestens eine geradlinige Elektrode (16) befestigt ist, die geeignet ist, in der Rille (22) zu gleiten.

7. Vorrichtung nach Anspruch 6,
**dadurch gekennzeichnet,**
**dass** die geradlinige Elektrode (16) zylinderförmig ist.

8. Vorrichtung nach Anspruch 6 oder 7,
**dadurch gekennzeichnet,**
**dass** sie ferner eine Platte (20) enthält, die dazu bestimmt ist, diese zylinderförmige Elektrode (16) in der Rille (22) zu halten.

9. Vorrichtung nach einem der Ansprüche 6 bis 8,
**dadurch gekennzeichnet,**
**dass** sie ferner Mittel aufweist, um den ersten Elektrodenhalter (12) und den zweiten Elektrodenhalter (18) gleichzeitig zu verschieben.

10. Vorrichtung nach einem der Ansprüche 6 bis 9,
**dadurch gekennzeichnet,**
**dass** sie ferner Mittel aufweist, um den ersten Elektrodenhalter (12) und den zweiten Elektrodenhalter (18) unabhängig voneinander zu verschieben.

11. Vorrichtung nach einem der Ansprüche 6 bis 10,
**dadurch gekennzeichnet,**
**dass** der erste Elektrodenhalter (12) eine Vielzahl von Formelektroden (10) trägt und der zweite Elektrodenhalter (18) eine Vielzahl von geradlinigen Elektroden (16) trägt.
